# EUROPÄISCHE PATENTANMELDUNG

(11) **EP 3 187 253 A1**
(43) Veröffentlichungstag der Anmeldung: **05.07.2017**
(21) Anmeldenummer: 15203068.0
(22) Anmeldetag: 30.12.2015
(51) Int. Cl.: B01F 5/06, B01J 19/00

(54) **KAVITATIONSREAKTOR ZUM BEHANDELN EINER FLIESSFÄHIGEN SUBSTANZ**

(71) Anmelder: AVARUS Suisse Holding AG, 6052 Hergiswil NW (CH)
(72) Erfinder: Schüler, Ralf, 85258 Weichs (DE)
(74) Vertreter: Puschmann Borchert Bardehle Patentanwälte Partnerschaft mbB

(57) **Zusammenfassung**

Ein Kavitationsreaktor zum Behandeln, insbesondere zum Mischen und/oder Homogenisieren, einer fließfähigen Substanz, die aus wenigstens zwei vorgemischten Komponenten besteht, mit einem rohrförmigen Gehäuse(4), in dem ein Reaktormodul (6) unter Bildung eines Ringraumes (8) zwischen dem Reaktormodul (6) und dem Gehäuse (4) über eine Reaktormodul-Halterung (10) angeordnet ist, einer Eingangsöffnung (12) für die Zufuhr der Substanz, und eine Ausgangsöffnung (14) für die Abgabe des aus den gemischten Substanzen bestehenden Massestroms, ist dadurch gekennzeichnet, dass der Reaktormodul (6) einen mit der Reaktormodul-Halterung (10) über eine Säule (16) befestigten Reaktorkopf (1) aufweist, der einen von der Säule (16) aus sich in Strömungsrichtung erweiternden Reaktorkopf-Abschnitt (20) umfasst, der eine Vielzahl von in Strömungsrichtung den Reaktorkopf-Abschnitt (20) durchsetzende Kanälen (22₁, 22₂, 22₃ bzw. 24₁, 24₂, 24₃, 24₄) aufweist.

## Beschreibung

Die Erfindung betrifft einen Kavitationsreaktor zum Mischen und/oder Homogenisieren einer fließfähigen Substanz, die aus wenigstens zwei vorgemischten Komponenten besteht.

Hydrodynamische Durchflussreaktoren der eingangs genannten Art, die auf der Basis von Kavitation arbeiten, sind aus der DE 103 10 442 A1 bekannt, die durch eine entsprechende Anordnung von schwer umströmbaren Körpern als Superkavitationsreaktoren ausgebildet werden können. Hierbei handelt es sich meist um statische Komponenten, die durch Versuche für die jeweiligen festen, flüssigen und/oder gasförmigen Strömungs-Komponenten optimiert werden müssen. Eine Regulierungsfunktion wird dann durch Variation des Vordrucks bzw. Verschiebung der Turbulenz erzeugenden Elemente erreicht. Bei diesen hydrodynamischen Reaktoren nach dem Stand der Technik ist daher die Auslegung und die Handhabung umständlich, und den Gegebenheiten diverser Anwendungen kann nur begrenzt Rechnung getragen werden.

DE 100 09 326 betrifft eine Vorrichtung zum Vermischen der Komponenten eines hindurchströmenden Massestromes, wobei die Komponenten insbesondere flüssig oder gasförmig sein können, mittels einem hydrodynamischen Superkavitationsfeld, um eine Mischung, insbesondere eine Emulsion oder Suspension, zu erzeugen, mit einem Gehäuse, das eine Eingangsöffnung für die Zufuhr mindestens eines Teils des zu vermischenden Massestromes und eine Ausgangsöffnung für die Entnahme des Massestromes aufweist; wobei das Gehäuse eine Durchflusskammer mit einem darin mittels einer Halterung angeordneten schwer umströmbaren Körper aufweist, und der schwer umströmbare Körper mindestens zwei schwer umströmbare Teilbereiche besitzt, die für jeweils eine lokale Strömungseinengung sorgen. Der Querschnitt der Durchflusskammer, der senkrecht zu ihrer Mittelachse genommen wird, soll wenigstens in einem Teil eines Bereichs, der den schwer umströmbaren Körper umgibt, in Strömungsrichtung größer werden. Der schwer umströmbare Körper umfasst mehrere schwer umströmbare, scheibenförmige, von einander beabstandete Teilkörper.

US 5 810 052 zeigt eine Kavitationseinrichtung mit einem rohrförmigen Gehäuse und einem in dem Gehäuse auf einer Säule gelagerten Kavitationskörper, der eine Einengung des Durchflussquerschnitts des Gehäuses bildet und in einem verengten Bereich des Gehäuses angeordnet ist.

Der Erfindung liegt die Aufgabe zu Grunde, einen Kavitationsreaktor zum Behandeln einer fließfähigen Substanz, die aus wenigstens zwei vorgemischten Reaktionskomponenten besteht, die aufgemischt und zur Reaktion gebracht werden, in Bezug auf Effizienz zu verbessern.

Dazu ist der erfindungsgemäße Kavitationsreaktor zum Behandeln, insbesondere zum Mischen und/oder Homogenisieren, einer fließfähigen Substanz, die aus wenigstens zwei vorgemischten Komponenten besteht, mit einem rohrförmigen Gehäuse, in dem ein Reaktormodul unter Bildung eines Ringraumes zwischen dem Reaktormodul und dem Gehäuse über eine Reaktormodul-Halterung angeordnet ist, einer Eingangsöffnung für die Zufuhr der Substanz, und eine Ausgangsöffnung für die Abgabe des aus den gemischten Substanzen bestehenden Massestroms, dadurch gekennzeichnet, dass der Reaktormodul einen mit der Reaktormodul-Halterung über eine Säule befestigten Reaktorkopf aufweist, der einen von der Säule aus sich in Strömungsrichtung erweiternden Reaktorkopf-Abschnitt umfasst, der eine Vielzahl von in Strömungsrichtung den Reaktorkopf-Abschnitt durchsetzende Kanälen aufweist. Da die Geschwindigkeiten der Substanz durch die Kanäle bereits wegen der unterschiedlichen Länge der Kanäle in den verschiedenen Kanälen verschieden sind, eignet sich der erfindungsgemäße Kavitationsreaktor besonders gut zum Mischen und/oder Homogenisieren von fließfähigen Substanzen von schwer mischbaren und/oder lösbaren Komponenten.

Eine vorteilhafte Ausführung des erfindungsgemäßen Kavitationsreaktors ist dadurch gekennzeichnet, dass die Kanäle unter unterschiedlichen radialen Abständen von einer Mittelachse des Reaktormoduls angeordnet sind und damit in Strömungsrichtung versetzt an dem sich erweiternden Reaktorkopf-Abschnitt austreten, wodurch sich die unterschiedlichen Fließgeschwindigkeiten in den Kanälen in einfacher Weise ergeben.

Eine weitere vorteilhafte Ausführung des erfindungsgemäßen Kavitationsreaktors ist dadurch gekennzeichnet, dass der sich erweiternden Reaktorkopf-Abschnitt stromab in einen im Außenumfang zylindrischen Reaktorkopf-Abschnitt übergeht, der an seiner stromab liegenden Seite eine trichterförmige Einbuchtung aufweist, wobei die Kanäle an der Einbuchtung an unterschiedlichen radialen Abständen von einer Mittelachse des Reaktorkopfes enden, was ebenfalls zur Verwirklichung unterschiedlicher Fließgeschwindigkeiten an den Austrittsenden der Kanäle in vorteilhafter Weise beiträgt.

Eine weitere vorteilhafte Ausführung des erfindungsgemäßen Kavitationsreaktors ist dadurch gekennzeichnet, dass die bei einem kleineren Abstand von einer Mittelachse des Reaktorkopfes liegenden Kanäle einen kleineren Durchmesser haben als die bei einem größeren Abstand von einer Mittelachse des Reaktorkopfes liegenden Kanäle, was ebenfalls in vorteilhafter Weise zur Verwirklichung unterschiedlicher Fließgeschwindigkeiten an den Austrittsenden der Kanäle in vorteilhafter Weise beiträgt.

Eine weitere vorteilhafte Ausführung des erfindungsgemäßen Kavitationsreaktors ist dadurch gekennzeichnet, dass stromauf von der Reaktormodul-Halterung eine Strömungsleiteinrichtung angeordnet ist, die einen durch eine Strömungsleitkörper-Halterung gelagerten Strömungsleitkörper mit mehreren Strömungsleitflügeln aufweist, die gegenüber der Mittelachse des Reaktormoduls unter gleichen Winkeln angeordnet sind. Durch den Strömungsleitkörper wird in vorteilhafter Weise ein Drall in der Strömung erteil, wodurch und eine vorläufige Durchmischung der Komponenten der Substanz durch Kavitation erreicht wird.

Eine weitere vorteilhafte Ausführung des erfindungsgemäßen Kavitationsreaktors ist dadurch gekennzeichnet, dass der Strömungsleitkörper an seinem stromab liegenden Ende einen sich trichterförmig erweiternden Abschnitt aufweist, der in vorteilhafter und einfacher Weise ebenfalls zu der Durchmischung der Komponenten der Substanz beiträgt.

Eine weitere vorteilhafte Ausführung des erfindungsgemäßen Kavitationsreaktors ist dadurch gekennzeichnet, dass die Strömungsleitkörper-Halterungeine Einengung um den Strömungsleitkörper herum bildet, wobei die Effizienz des Kavitationsreaktors weiter erhöht wird.

Eine weitere vorteilhafte Ausführung des erfindungsgemäßen Kavitationsreaktors ist dadurch gekennzeichnet, dass das Gehäuse in dem Bereich des Reaktormoduls eine Einengung aufweist, wobei ebenfalls die Effizienz des Kavitationsreaktors weiter erhöht wird.

Eine weitere vorteilhafte Ausführung des erfindungsgemäßen Kavitationsreaktors ist dadurch gekennzeichnet, dass das Gehäuse stromab von dem Reaktormodul zylindrisch ist, sodass die fertige Substanz. Ohne weiteren Stau aus dem Kavitationsreaktor abgeführt werden kann.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

Es zeigen:
- Figur 1: eine Schnittdarstellung eines Ausführungsbeispiels des erfindungsgemäßen Kavitationsreaktors;
- Figur 2: eine schematische Darstellung des Reaktorkopf-Abschnitts;
- Figur 3: einen Schnitt durch eine Reaktor-Halterung;
- Figur 4: eine Draufsicht auf die Reaktor-Halterung;
- Figur 5: eine Draufsicht auf eine Strömungsleitkörper-Halterung;
- Figur 6: eine Draufsicht auf einen Strömungsleitkörper.

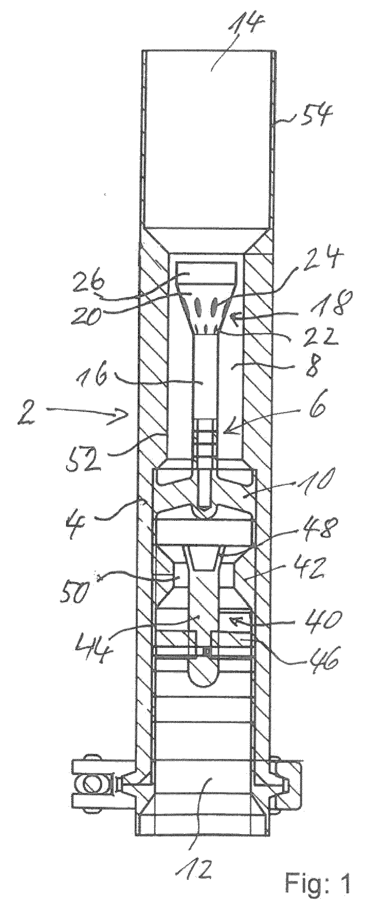

Figur 1 zeigt eine Schnittdarstellung des erfindungsgemäßen Kavitationsreaktors 2 zum Behandeln, insbesondere zum Mischen und/oder Homogenisieren, einer fließfähigen Substanz, die aus wenigstens zwei vorgemischten Komponenten besteht. Der Kavitationsreaktor 2 hat ein rohrförmiges Gehäuse 4, in dem ein Reaktormodul 6 unter Bildung eines Ringraumes 8 zwischen dem Reaktormodul 6 und dem Gehäuse 4 über eine Reaktormodul-Halterung 10 angeordnet ist. Das Gehäuse 4 hat eine Eingangsöffnung 12 für die Zufuhr der Substanz, und eine Ausgangsöffnung 14 für die Abgabe des aus den gemischten Substanzen bestehenden Massestroms.

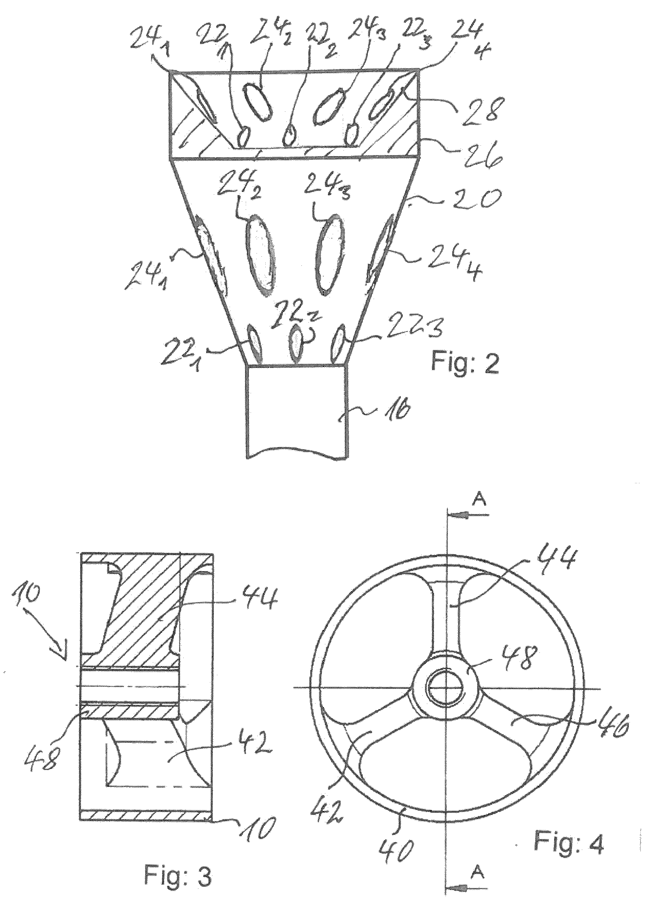

Der Reaktormodul 6 hat einen mit der Reaktormodul-Halterung 10 über eine Säule 16 befestigten Reaktorkopf 18 aufweist, der einen von der Säule 16 aus sich in Strömungsrichtung erweiternden Reaktorkopf-Abschnitt 20 umfasst, der eine Vielzahl von in Strömungsrichtung den Reaktorkopf-Abschnitt 20 durchsetzende Kanälen 22₁, 22₂ , 22₃ bzw. 24₁, 24₂, 24₃, 24₄ aufweist. Die Kanäle 22₁, 22₂, 22₃ und die Kanäle 24₁, 24₂, 24₃, 24₄ sind unter unterschiedlichen radialen Abständen von einer Mittelachse des Reaktormoduls 6 angeordnet und treten damit in Strömungsrichtung in Achsrichtung des Reaktorkopfes 18 versetzt an dem sich erweiternden Reaktorkopf-Abschnitt 20 aus nach unten (Blickrichtung wie in Figur 2) aus.

Der sich erweiternde Reaktorkopf-Abschnitt 20 geht stromab in einen im Außenumfang zylindrischen Reaktorkopf-Abschnitt 26 über. Der zylindrische Reaktorkopf-Abschnitt 26 hat an seiner stromab liegenden Seite eine trichterförmige Einbuchtung 28. Figur 2 zeigt eine schematische Darstellung des Reaktorkopf-Abschnitts 20, wobei die Lage der Kanäle 22₁, 22₂, 22₃ bzw. 24₁, 24₂, 24₃, 24₄ in Bezug auf den Reaktorkopf-Abschnitt 20 zu erkennen ist. Da die Kanäle 22₁, 22₂, 22₃ bzw. 24₁, 24₂, 24₃, 24₄ in der Einbuchtung 28 enden, sind auch deren obere Enden in Achsrichtung des Reaktorkopfes 18 versetzt. Die Kanäle 22₁, 22₂, 22₃ haben einen kleineren Durchmesser als die Kanäle 24₁, 24₂, 24₃, 24₄ wodurch sich im Betrieb eine höhere Fließgeschwindigkeit in den Kanälen 22₁, 22₂, 22₃ als in den Kanälen 24₁, 24₂, 24₃, 24₄ ergibt. Die unterschiedlichen Fließgeschwindigkeiten und ein Unterdruck, der sich in der Einbuchtung ergibt, tragen wesentlich zu der Kavitation bei.

Die Reaktormodul-Halterung 10 ist in den Figuren 3 und 4 gezeigt, wobei Figur 4 eine Draufsicht auf die Reaktormodul-Halterung 10 und Figur 3 einen Schnitt durch die Reaktormodul-Halterung 10 entlang der Schnittlinie A - A in Fig.4 zeigt. Die Reaktormodul-Halterung 10 umfasst einen zylindrischen Gehäuseteil 30 und drei Streben 32, 34, 36 die einen zentralen Sockel 38 an dem die Säule 16 des Reaktormoduls 6 zu befestigen ist. Durch diese Ausgestaltung der Reaktormodul-Halterung 10 wird eine im Wesentlichen ungehinderte Strömung durch die Reaktormodul-Halterung 10 gewährleistet.

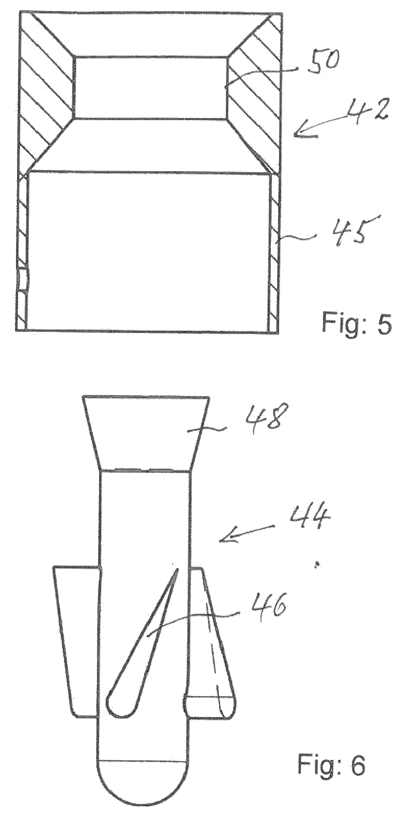

In dem Kavitationsreaktor 2 ist stromauf von der Reaktormodul-Halterung 10 eine Strömungsleiteinrichtung 40 angeordnet, die einen durch eine Strömungsleitkörper-Halterung 42 gelagerten Strömungsleitkörper 44 mit mehreren Strömungsleitflügeln 46 aufweist, die gegenüber der Mittelachse des Reaktormoduls 6 unter gleichen Winkeln angeordnet sind. Die Strömungsleitflügel 46 sind in Figur 6 verkürzt dargestellt, reichen jedoch bis zu einer zylindrischen Umfangswand 45 (siehe Figur 5) und sind damit verbunden, beispielsweise durch Schweißpunkte. Der Strömungsleitkörper 44 hat an seinem stromab liegenden Ende einen sich trichterförmig erweiternden Abschnitt 48, der innen hohl ist.

Wie aus Figur 1 zu ersehen ist, hat die Strömungsleitkörper-Halterung42 um den Strömungsleitkörper 44 herum eine Einengung 50. Das Gehäuse 4 hat in dem Bereich des Reaktormoduls 6 ebenfalls eine Einengung 52. Schließlich hat das Gehäuse 4 stromab von dem Reaktormodul einen zylindrischen Wandabschnitt 54 mit vollem Rohrdurchmesser.

In der Praxis führt der Kavitationsreaktor bereits in einem Durchlauf zu weitgehend befriedigenden Ergebnissen. Im Falle ein Durchlauf durch den Kavitationsreaktor nicht ausreicht, kann der Kavitationsreaktor in einem Kreislaufsystem eingesetzt werden, sodass der Massenstrom im Batch-Betrieb behandelt werden kann, indem er mehrfach durch der Kavitationsreaktorhin durchgeführt und über das Kreislaufsystem wieder eingeführt wird. Die Anzahl der Durchläufe hängt davon ab, nach wieviel Stunden/Durchläufen das gewünschte Mischergebnis erzielt wird. Als Alternative finden auch zwei oder mehrere Kavitationsreaktoren hintereinander geschaltet werden.

Bei dem erfindungsgemäßen Kavitationsreaktor werden mittels turbulenter Strömungen in dem Reaktionsraum hydrodynamische Kräftefelder aufgebaut, dass zur Kavitation bzw. Superkavitation führen und die vielfältig genutzt werden können: Der erfindungsgemäße Kavitationsreaktor eignet sich zum Mischen und/oder Homogenisieren von fließfähigen Substanzen von schwer mischbaren und/oder lösbaren Komponenten, z. B. hydrophoben und hydrophilen Gemischen wie Wasser/Öl, Milch/Fett, Kraftstoff/Wasser, insbesondere zum Mischen, Emulgieren, Dispergieren, Homogenisieren in Systemen, die Strömungskomponenten in Form von fest-flüssigen oder flüssig-festen oder flüssigflüssigen oder gasförmig-flüssigen oder flüssig-gasförmigen Phasen. Wenn die Substanzen noch reaktionsfähige Komponenten enthalten, werden diese Komponenten weiterhin zur Reaktion gebracht als eine Art Nachbehandlung der Substanzen. Die Substanzen können auch kremartige oder flüssige Lebensmitteln, kremartige oder flüssige Körperpflegemittel, allgemein Emulsionen oder Suspensionen sein.

Im Folgenden werden Beispiele für den erfolgreichen Einsatz des erfindungsgemäßen Kavitationsreaktors zur Herstellung von Ketschup und zur Herstellung einer Creme angegeben.

Die getestete Ketschup-Menge enthielt 13 kg Wasser, 9 kg Tomatenmark, 3,2 kg Zucker, 0,3 kg Salz und 4,5 kg Essig. Bereits nach einem Durchgang durch den erfindungsgemäßen Kavitationsreaktor ergab sich ein nahezu volles befriedigendes Ergebnis, was durch einen wiederholten Durchgang weiter verbessert werden konnte. Außerdem zeigte das Ketschup mit 35 % Tomatenmark nach 5 Tagen Standzeit keine Wasserausscheidung, was auf eine hervorragende Beständigkeit des Ketchups spricht. Die getestete Creme enthielt 30,4 kg 1,5% Carbopolgell als Wasserphase, 1,6 kg Tween 80, 7,2 kg Mineralöl, 0,8 kg Span 20 und wurde bei 40° C getestet.

In einem Versuch wurde vorgefertigtes Carbopolgel zunächst mit dem Mineralöl untergemischt. Danach wurden die Komponenten durch dem Kavitationsreaktor bearbeitet. Dabei wurde bereits nach einer Passage (2 Minuten) eine Tröpfchenverteilung unter 1 µ festgestellt. Das Ergebnis war ausgezeichnet und wurde durch eine sehr hohe Homogenität als auch ein optisch hohen Glanz, der auch über ein Langzeittest nicht verloren geht, gekennzeichnet.

## Patentansprüche

1. Kavitationsreaktor zum Behandeln, insbesondere zum Mischen und/oder Homogenisieren, einer fließfähigen Substanz, die aus wenigstens zwei vorgemischten Komponenten besteht, mit
einem rohrförmigen Gehäuse(4), in dem ein Reaktormodul (6) unter Bildung eines Ringraumes (8) zwischen dem Reaktormodul (6) und dem Gehäuse (4) über eine Reaktormodul-Halterung (10) angeordnet ist,
einer Eingangsöffnung (12) für die Zufuhr der Substanz, und
eine Ausgangsöffnung (14) für die Abgabe des aus den gemischten Substanzen bestehenden Massestroms,
**dadurch gekennzeichnet, dass**
der Reaktormodul (6) einen mit der Reaktormodul-Halterung (10) über eine Säule (16) befestigten Reaktorkopf (18) aufweist, der einen von der Säule (16) aus sich in Strömungsrichtung erweiternden Reaktorkopf-Abschnitt (20) umfasst, der eine Vielzahl von in Strömungsrichtung den Reaktorkopf-Abschnitt (20) durchsetzende Kanälen (22₁, 22₂, 22₃ bzw. 24₁, 24₂, 24₃, 24₄) aufweist.

2. Kavitationsreaktor nach Anspruch 1, **dadurch gekennzeichnet, dass** die Kanäle (22₁, 22₂, 22₃ bzw. 24₁, 24₂, 24₃, 24₄) unter unterschiedlichen radialen Abständen von einer Mittelachse des Reaktormoduls (6) angeordnet sind und damit in Strömungsrichtung versetzt an dem sich erweiternden Reaktorkopf.-Abschnitt (20) austreten.

3. Kavitationsreaktor nach Anspruch 1 oder 2, **dadurch gekennzeichnet, dass** der sich erweiternden Reaktorkopf-Abschnitt (20) stromab in einen im Außenumfang zylindrischen Reaktorkopf-Abschnitt (26) übergeht, der an seiner stromab liegenden Seite eine trichterförmige Einbuchtung (28) aufweist, wobei die Kanäle (22₁, 22₂, 22₃ bzw. 24₁, 24₂, 24₃, 24₄) an der Einbuchtung (28) an unterschiedlichen radialen Abständen von einer Mittelachse des Reaktorkopfes enden.

4. Kavitationsreaktor nach Anspruch 1 oder 2, **dadurch gekennzeichnet, dass** die bei einem kleineren Abstand von einer Mittelachse des Reaktorkopfes (18) liegenden Kanäle (22₁, 22₂, 22₃ bzw. 24₁, 24₂, 24₃, 24₄) einen kleineren Durchmesser haben als die bei einem größeren Abstand von einer Mittelachse des Reaktorkopfes (18) liegenden Kanäle (22₁, 22₂, 22₃ bzw. 24₁, 24₂, 24₃, 24₄)

5. Kavitationsreaktor nach Anspruch 1 oder 2, **dadurch gekennzeichnet, dass** stromauf von der Reaktormodul-Halterung (10) eine Strömungsleiteinrichtung (40) angeordnet ist, die einen durch eine Strömungsleitkörper-Halterung (42) gelagerten Strömungsleitkörper (44) mit mehreren Strömungsleitflügeln (46) aufweist, die gegenüber der Mittelachse des Reaktormoduls (6) unter gleichen Winkeln angeordnet sind.

6. Kavitationsreaktor nach Anspruch 1 oder 2, **dadurch gekennzeichnet, dass** der Strömungsleitkörper (44) an seinem stromab liegenden Ende einen sich trichterförmig erweiternden Abschnitt (48) aufweist.

7. Kavitationsreaktor nach Anspruch 4 oder 5, **dadurch gekennzeichnet, dass** die Strömungsleitkörper-Halterung(10) eine Einengung (50) um den Strömungsleitkörper (44) herum bildet.

8. Kavitationsreaktor nach Anspruch 4 oder 5, **dadurch gekennzeichnet, dass** das Gehäuse (4) in dem Bereich des Reaktormoduls (6) eine Einengung (52) aufweist.

9. Kavitationsreaktor nach Anspruch 4 oder 5, **dadurch gekennzeichnet, dass** das Gehäuse (4) stromab von dem Reaktormodul (6) einen zylindrischen Wandabschnitt (54) aufweist.
